# FASCICULE DE BREVET EUROPEEN

(11) **EP 1 029 485 B1**
(45) Date de publication et mention de la délivrance du brevet: **21.05.2003**
(21) Numéro de dépôt: 00400412.3
(22) Date de dépôt: 11.02.2000
(51) Int. Cl.: A47J 31/06

(54) **Porte-filtre à café comprenant un élément thermosensible**
Filterträger mit einem thermosensiblen Element
Filter carrier with a thermosensitive element

(30) Priorité: 18.02.1999 FR 9902745
(43) Date de publication de la demande: 23.08.2000
(73) Titulaire: SEB S.A., 69130 Ecully (FR)
(72) Inventeur: Cottineau, M Alain, 72600 Neufchatel en Saosnois (FR); Soudan, Séverine, 61250 Damigny (FR)
(74) Mandataire: Kiehl, Hubert

(56) Documents cités:
- DE-A- 3 821 994
- FR-A- 2 758 962
- US-A- 5 185 505

## Description

L'invention concerne un porte-filtre à café destiné à équiper notamment une cafetière électrique.

En particulier, l'invention vise un porte-filtre à café comportant un corps de forme générale en entonnoir, susceptible de recevoir un filtre à l'intérieur duquel est placée de la poudre de café et recevant de l'eau préalablement chauffée, ledit corps présentant dans sa partie inférieure un orifice de sortie pour l'écoulement d'une infusion filtrée, et un dispositif d'obturation de l'orifice de sortie comportant un organe bimétallique.

Un tel porte-filtre est notamment décrit dans la demande de brevet français n°97 01041, dans laquelle l'organe bimétallique est situé dans le fond du porte-filtre, constituant lui-même l'obturateur destiné à ouvrir ou fermer le passage de l'infusion au travers de l'orifice. Cet organe bimétallique est revêtu d'un matériau de faible conductibilité thermique, de façon à introduire un délai de temporisation dans les cycles d'obturation.

Un tel système est prévu pour augmenter la période durant laquelle l'eau préalablement chauffée reste en contact avec la mouture de café contenue dans le filtre, alors qu'un porte-filtre dépourvu de système d'obturation présentait l'inconvénient d'un passage trop rapide de l'eau dans le cas de faibles quantités de mouture, ce qui était pénalisant du point de vue de la qualité de l'infusion de café ainsi obtenue. Le système décrit dans le brevet précédemment décrit ne donne cependant pas entière satisfaction, essentiellement pour les raisons suivantes :
- puisque l'organe bimétallique constitue lui-même l'obturateur, la moindre imprécision dimensionnelle dans la fabrication ou l'assemblage des différentes pièces génère un dysfonctionnement relativement important du dispositif ;
- seul le retard de la montée en température de l'organe bimétallique permet d'obtenir le résultat recherché, donc la suppression ou la diminution de ce retard, par exemple dans le cas de deux utilisations successives rapprochées, réduit considérablement la temporisation, et par conséquent l'efficacité du dispositif.

L'invention a pour principal objet de remédier aux inconvénients ci-dessus, c'est à dire de réaliser un porte-filtre à café comportant un système d'ouverture/fermeture à temporisation, simple de fabrication et d'assemblage, fiable, et fonctionnant en cas d'utilisations successives rapprochées.

Ces buts sont atteints par l'invention, qui dispose que le dispositif d'obturation est monté sur la paroi interne du corps, que l'organe bimétallique est disposé à distance de l'orifice de sortie, et que le dispositif d'obturation comporte en outre une tige coulissante dont l'extrémité supérieure est solidaire de l'organe bimétallique, et l'extrémité inférieure porte un obturateur apte à coopérer avec l'orifice de sortie, de sorte que l'obturateur passe d'une position fermée dans laquelle il forme barrage à l'écoulement de l'infusion filtrée, à une position ouverte dans laquelle il autorise l'écoulement de l'infusion à travers l'orifice de sortie, lorsque l'infusion entre en contact thermique avec l'organe bimétallique.

L'invention vise également une cafetière électrique équipée d'un porte-filtre objet de la première partie de l'invention et décrit précédemment.

D'autres caractéristiques et avantages de l'invention ressortiront de la description qui va suivre, donnée à titre d'exemple non limitatif, en référence aux dessins annexés dans lesquels:
- la figure 1 est une vue en perspective d'un porte-filtre à café suivant l'invention ;
- la figure 2 est une vue en perspective avec arrachement partiel d'un porte-filtre à café suivant l'invention ;
- la figure 3 est une vue en coupe, suivant un plan incliné sur la verticale contenant l'axe de l'obturateur, du porte-filtre suivant les figures 1 et 2, l'obturateur étant en position fermée.
- la figure 4 est une vue en coupe, suivant le même plan que la figure 3, l'obturateur étant en position ouverte.

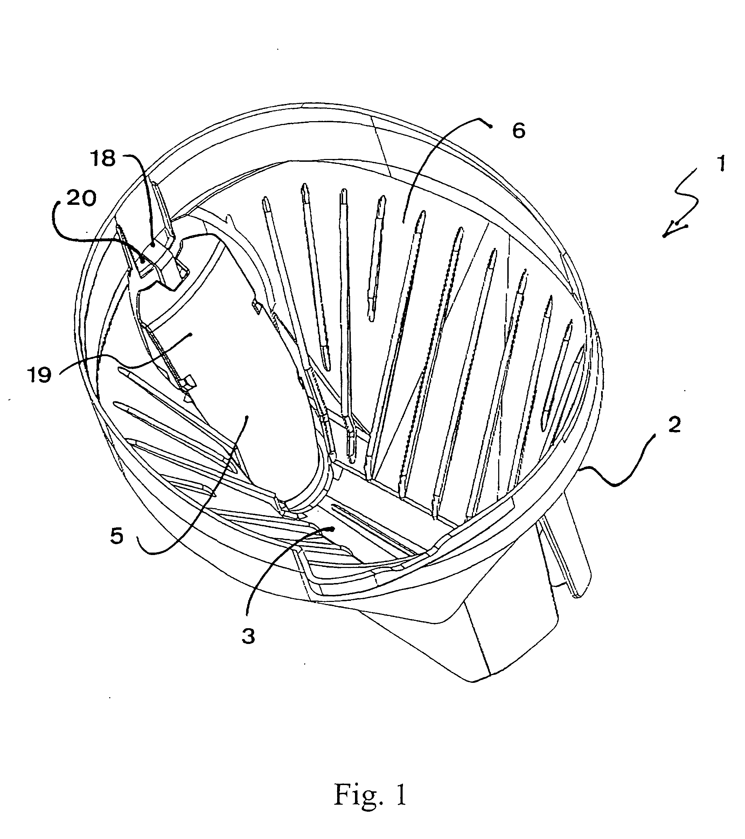

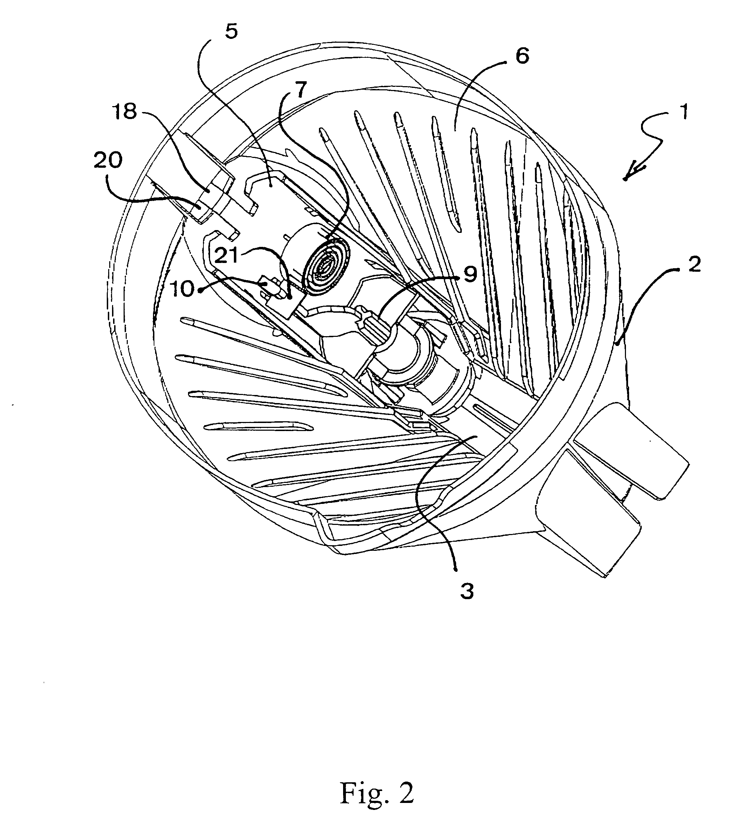

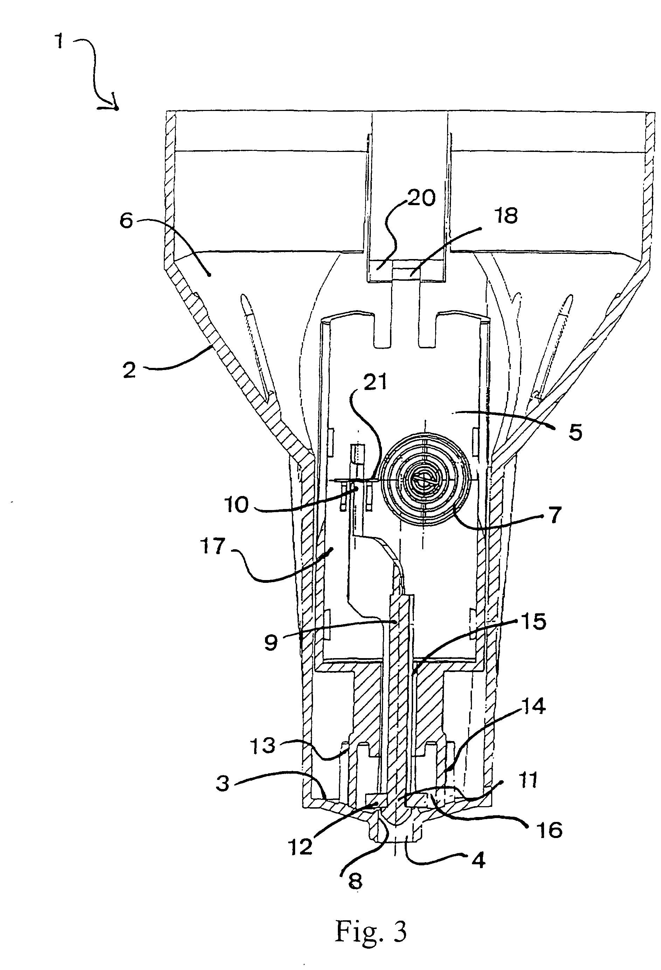

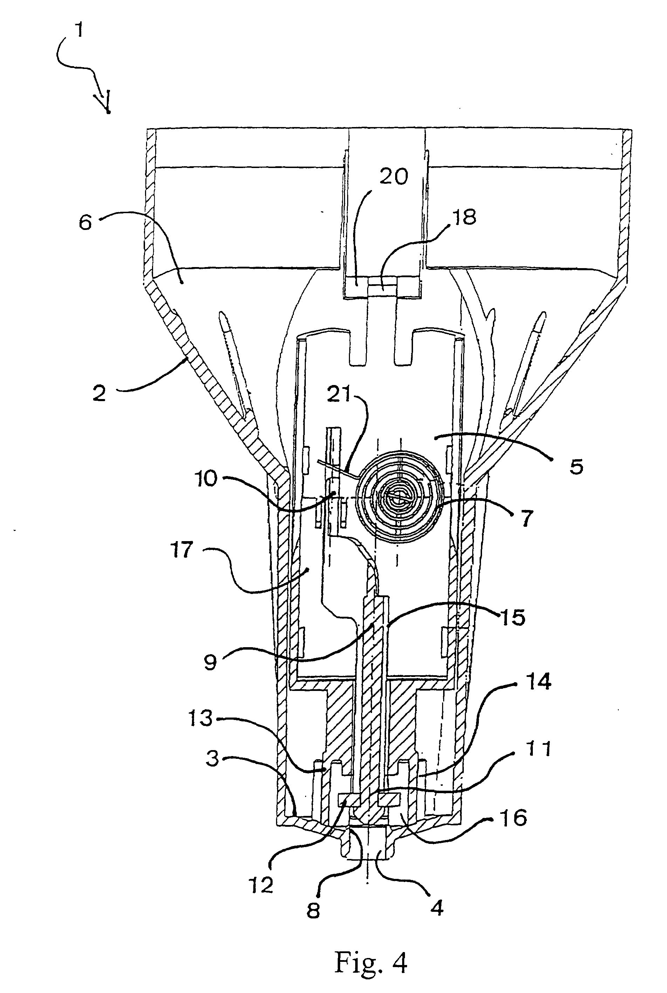

Aux figures 1 et 2, on a représenté un porte-filtre à café 1 destiné à équiper une cafetière électrique dite « goutte-à-goutte », dans lequel un corps 2 en forme générale d'entonnoir est adapté à recevoir sur sa paroi interne 6 un filtre, généralement en papier, que l'utilisateur remplit partiellement de poudre de café avant que ne s'écoule l'eau préalablement chauffée. Un tel porte-filtre est disposé sur un support de la cafetière prévu à cet effet, au-dessus d'un récipient collectant l'infusion, appelée verseuse. Le corps 2 présente dans sa partie inférieure 3 un orifice de sortie 4, comme représenté aux figures 3 et 4, pour l'écoulement de l'infusion filtrée dans la verseuse, et un dispositif d'obturation 5 de l'orifice de sortie 4, monté sur la paroi interne 6 du corps 2. Ce dispositif d'obturation 5 comporte un organe bimétallique 7 sensible à la température, de sorte que de l'organe bimétallique 7 passe d'un premier état correspondant à une première forme à température ambiante, à un second état correspondant à une seconde forme lorsque sa température atteint une valeur de seuil, et ce de façon réversible.

Suivant l'invention, l'organe bimétallique 7 est disposé à distance de l'orifice de sortie 4, c'est-à-dire qu'il n'est pas attenant aux parois 8 qui définissent ledit orifice de sortie, et le dispositif d'obturation 5 comporte une tige coulissante 9 dont l'extrémité supérieure 10 est solidaire de l'organe bimétallique 7 et l'extrémité inférieure 11 porte un obturateur 12 apte à coopérer avec l'orifice de sortie 4 ; de cette façon, l'obturateur 12 passe d'une position fermée dans laquelle il forme barrage à l'écoulement de l'infusion filtrée, à une position ouverte dans laquelle il autorise l'écoulement de l'infusion à travers l'orifice de sortie 4, lorsque l'infusion entre en contact thermique avec l'organe bimétallique 7.

A l'état initial, c'est-à-dire avant la mise en marche de l'appareil qui provoque le chauffage de l'eau et son écoulement dans le filtre à café, l'obturateur 12 ferme l'orifice de sortie 4 : c'est ce qui est représenté sur la figure 3. Cette configuration « fermée » correspond à un premier état de l'organe bimétallique 7.

Lorsque l'utilisateur met en marche la cafetière, l'eau est chauffée puis versée par la partie évasée du filtre sur la poudre de café ; l'eau s'accumule dans le porte-filtre 1 en baignant le filtre et la poudre de café qui y est contenue. L'eau pénètre dans le dispositif d'obturation 5 par des échancrures 14 pratiquées dans sa partie inférieure 13, le niveau d'eau dans le dispositif 5 suivant le niveau d'eau dans le porte-filtre 1 grâce à un canal vertical 15 reliant des chambres inférieure 16 et supérieure 17 du dispositif 5 et dans lequel est montée à coulissement la tige 9. L'organe bimétallique 7 est disposé dans ladite chambre supérieure 17.

Lorsque le niveau d'eau atteint l'organe bimétallique 7, celui-ci voit sa température augmenter sensiblement et atteindre sa valeur de seuil au-delà de laquelle il passe dans sa seconde position stable, en actionnant la tige coulissante 9 vers une position haute dans laquelle l'obturateur 12, constitué par exemple d'un joint annulaire, libère l'orifice de sortie 4 et permet l'écoulement par gravité de l'infusion vers la verseuse. Cette configuration « ouverte » du dispositif est représentée à la figure 4.

Afin que le dispositif d'obturation 5 introduise une durée de rétention suffisante de l'infusion dans le porte-filtre, l'invention prévoit que la distance séparant l'orifice de sortie de l'organe bimétallique corresponde à un volume d'infusion au moins égal à 100 ml, ce volume correspondant à la capacité standard d'une tasse.

Ainsi le porte-filtre suivant l'invention ne permet-il pas la préparation d'une quantité de café inférieure à la capacité d'une tasse standard, en la présence du dispositif d'obturation.

Avantageusement, l'organe bimétallique 7 est constitué d'un simple ressort spiralé bimétallique, sans traitement spécifique susceptible de nuire à son fonctionnement.

Grâce à cette disposition, le passage d'une position stable à l'autre de l'organe bimétallique 7 se traduit par un débattement angulaire d'une patte 21 qui constitue l'extrémité extérieure du ressort spiralé, et qui est solidaire de l'extrémité supérieure 10 de la tige coulissante 9, ce débattement générant un déplacement important de la tige coulissante 9. Le dispositif évite donc l'essentiel des dysfonctionnements, qui se manifestent par exemple par des fuites ou un blocage de l'obturateur, mais également la nécessité d'une fabrication et d'un montage trop précis.

Une excellente efficacité est ainsi atteinte pour un faible coût.

Dans le but de rendre le porte-filtre suivant l'invention utilisable quelle que soit la quantité d'infusion à préparer, en particulier si l'utilisateur désire préparer une quantité de café correspondant à 100 ml ou moins, l'invention prévoit que le dispositif d'obturation 5 soit monté de façon amovible sur la paroi interne 6 du corps 2 du porte-filtre 1.

Cette caractéristique permet plus généralement de rendre optionnelle l'utilisation du dispositif d'obturation 5. En d'autres termes, le dispositif d'obturation 5 ainsi défini se présente comme un module qui peut être retiré ou ajouté, remplacé, ou éventuellement vendu séparément du porte-filtre.

Suivant une autre caractéristique avantageuse de l'invention, le dispositif d'obturation 5 présente une enveloppe rigide 19, fixée sur la paroi interne 6, à l'intérieur de laquelle sont agencés l'organe bimétallique7 et la tige coulissante 9. De cette façon, le dispositif d'obturation 5 peut être manipulé sans que ses composants mécaniques ne soient détériorés ou déréglés.

Afin de simplifier les opérations de montage et de démontage du dispositif d'obturation 5, l'enveloppe rigide 19 présente au moins un organe de fixation élastique 18, destiné à coopérer avec au moins un organe complémentaire 20 formé sur le corps 2 du porte-filtre 1.

On voit bien que le porte-filtre tel qu'il a été décrit, permet d'allonger la durée pendant laquelle l'eau est en contact avec la poudre de café, et ainsi d'obtenir une meilleure qualité d'infusion, en particulier pour des quantités de mouture de café relativement faibles, et ce grâce à un dispositif de grande fiabilité, de coût réduit, qui permet en outre une grande souplesse d'utilisation.

## Revendications

1. Porte-filtre à café, destiné à équiper notamment une cafetière électrique, du type comportant un corps (2) de forme générale en entonnoir, susceptible de recevoir un filtre à l'intérieur duquel est placée de la poudre de café et recevant de l'eau préalablement chauffée, ledit corps (2) présentant dans sa partie inférieure un orifice de sortie (4) pour l'écoulement d'une infusion filtrée, et un dispositif d'obturation (5) de l'orifice de sortie (4) comportant un organe bimétallique (7),
**caractérisé en ce que** le dispositif d'obturation (5) est monté sur la paroi interne (6) du corps (2), que l'organe bimétallique (7) est disposé à distance de l'orifice de sortie (4), et que le dispositif d'obturation (5) comporte en outre une tige coulissante (9) dont l'extrémité supérieure (10) est solidaire de l'organe bimétallique (7), et l'extrémité inférieure (11) porte un obturateur (12) apte à coopérer avec l'orifice de sortie (4), de sorte que l'obturateur (12) passe d'une position fermée dans laquelle il forme barrage à l'écoulement de l'infusion filtrée, à une position ouverte dans laquelle il autorise l'écoulement de l'infusion à travers l'orifice de sortie (4), lorsque l'infusion entre en contact thermique avec l'organe bimétallique (7).

2. Porte-filtre à café selon la revendication 1, **caractérisé en ce que** la distance séparant l'orifice de sortie (4) de l'organe bimétallique (7) correspond à un volume d'infusion au moins égal à 100 ml.

3. Porte-filtre à café selon la revendication 1 ou 2, **caractérisé en ce que** l'organe bimétallique (7) est un ressort spiralé bimétallique.

4. Porte-filtre à café selon l'une des revendications 1 à 3,
**caractérisé en ce** le dispositif d'obturation (5) est monté de façon amovible sur la paroi interne (6) du corps (2) du porte-filtre (1).

5. Porte-filtre à café selon la revendication 4, **caractérisé en ce que** le dispositif d'obturation (5) présente une enveloppe rigide (19) à l'intérieur de laquelle sont agencés l'organe bimétallique (7) et la tige coulissante (9).

6. Porte-filtre à café selon la revendication 5, **caractérisé en ce que** l'enveloppe rigide (19) présente au moins un organe de fixation élastique (18), destiné à coopérer avec au moins un organe complémentaire (20) formé sur le corps (2) du porte-filtre (1).

7. Cafetière électrique
**caractérisée en ce qu'**elle est équipée d'un porte-filtre suivant l'une des revendications 1 à 6.

## Claims

1. Coffee filter holder, intended to equip in particular an electric coffee maker, of the type having a body (2) with the general shape of a funnel, able to receive a filter inside which coffee powder is placed and receiving previously heated water, the said body (2) having in its bottom part an outlet orifice (4) for the discharge of a filtered infusion, and a device (5) for closing off the outlet orifice (4) comprising a bimetallic member (7), **characterised in that** the closure device (5) is mounted on the internal wall (6) of the body (2), **in that** the bimetallic member (7) is disposed at a distance from the outlet orifice (4), and **in that** the closure device (5) also comprises a sliding rod (9) whose top end (10) is fixed to the bimetallic member (7), and whose bottom end (11) carries an obturator (12) able to cooperate with the outlet orifice (4), so that the obturator (12) passes from a closed position in which it forms a barrier to the flow of the filtered infusion to an open position in which it allows the flow of the infusion through the outlet orifice (4) when the infusion comes into thermal contact with the bimetallic member (7).

2. Coffee filter holder according to Claim 1, **characterised in that** the distance separating the outlet orifice (4) from the bimetallic member (7) corresponds to a volume of infusion of at least 100 ml.

3. Coffee filter holder according to Claim 1 or 2, **characterised in that** the bimetallic member (7) is a bimetallic spiral spring.

4. Coffee filter holder according to one of Claims 1 to 3, **characterised in that** the closure device (5) is removably mounted on the internal wall (6) of the body (2) of the filter holder (1).

5. Coffee filter holder according to Claim 4, **characterised in that** the closure device (5) has a rigid enclosure (19) inside which the bimetallic member (7) and the sliding rod (9) are arranged.

6. Coffee filter holder according to Claim 5, **characterised in that** the rigid enclosure (9) has at least one elastic fixing member (18) intended to cooperate with at least one complementary member (20) formed on the body (2) of the filter holder (1).

7. Electric coffee maker, **characterised in that** it is equipped with a filter holder according to one of Claims 1 to 6.

## Patentansprüche

1. Kaffeefilter-Träger zur Ausrüstung besonders einer elektrischen Kaffeemaschine vom Typ mit einem Körper (2) von im ganzen Trichterform, der einen Filter aufnehmen kann, in dessen Inneren das Kaffeemehl gegeben wird und der das zuvor erhitzte Wasser aufnimmt, wobei der Körper (2) in seinem unteren Teil eine Austrittsöffnung (4) für den Auslauf eines gefilterten Brühgetränks und eine Verschlußvorrichtung (5) der Austrittsöffnung (4) mit einem Bimetallelement (7) aufweist, **dadurch gekennzeichnet, daß** die Verschlußvorrichtung (5) an der Innenwand (6) des Körpers (2) montiert ist, daß das Bimetallelement (7) in einem Abstand von der Austrittsöffnung (4) angeordnet ist und das Verschlußelement (5) außerdem eine verschiebbare Stange (9) aufweist, deren oberes Ende (10) mit dem Bimetallelement (7) fest verbunden ist und deren unteres Ende (11) ein Verschlußelement (12) trägt, das mit der Austrittsöffnung (4) zusammenwirken kann, so daß das Verschlußelement (12) aus einer Schließstellung, in welcher es eine Sperre für den Auslauf des filtrierten Brühgetränks bildet, in eine Öffnungsstellung gelangt, in der es das Auslaufen des Brühgetränks durch die Austrittsöffnung (4) zuläßt, wenn das Brühgetränk in Wärmekontakt mit dem Bimetallelement (7) gelangt.

2. Kaffeefilter-Träger nach Anspruch 1, **dadurch gekennzeichnet, daß** der Abstand zwischen der Austrittsöffnung (4) und dem Bimetallelement (7) einem Brühgetränkvolumen von mindestens 100ml entspricht.

3. Kaffeefilter-Träger nach Anspruch 1 oder 2, **dadurch gekennzeichnet, daß** das Bimetallelement (7) eine Bimetall-Spiralfeder ist.

4. Kaffeefilter-Träger nach einem der Ansprüche 1 bis 3, **dadurch gekennzeichnet, daß** die Verschlußvorrichtung (5) abnehmbar an der Innenwand (6) des Körpers (2) des Filterträgers (1) montiert ist.

5. Kaffeefilter-Träger nach Anspruch 4, **dadurch gekennzeichnet, daß** die Verschlußvorrichtung (5) ein starres Gehäuse (19) aufweist, in dessen Inneren das Bimetallelement (7) und die verschiebbare Stange (9) angeordnet sind.

6. Kaffeefilter-Träger nach Anspruch 5, **dadurch gekennzeichnet, daß** das starre Gehäuse (19) mindestens ein elastisches Befestigungselement (18) aufweist, das zum Zusammenwirken mit mindestens einem komplementären Element (20) bestimmt ist, das am Körper (2) des Filterträgers (1) ausgebildet ist.

7. Elektrische Kaffeemaschine, **dadurch gekennzeichnet, daß** sie mit einem Filterträger nach einem der Ansprüche 1 bis 6 ausgerüstet ist.
